# EUROPEAN PATENT APPLICATION

(11) **EP 1 297 935 A2**
(43) Date of publication of application: **02.04.2003**
(21) Application number: 02080134.6
(22) Date of filing: 20.01.2000
(51) Int. Cl.: B28D 7/04, B27B 27/02, B23D 47/02, B27B 25/10, B27B 27/10

(54) **Tile cutter with guide fence and mitre fence**

(30) Priority: 23.01.1999 GB 9901380
(62) Divisional of application: 00900705.5
(71) Applicant: TURNER INTELLECTUAL PROPERTY LIMITED, Burton-on-Trent, Staffordshire DE14 1SD (GB)
(72) Inventor: Hepworth, Paul Steabben, Guilford, Surrey GU1 3TP (GB)
(74) Representative: Dealtry, Brian

(57) **Abstract**

A tile cutter has a base (10) over which a guide fence (11:31) is slidably adjustable, opposite ends of the guide fence having a hook (18:44) and a clamp arrangement (20-22:34,38) respectively for locking the guide fence in an adjusted position. The clamp arrangement is operated by pivoting a locking lever (19:47) to move a member (22:43) towards wings (20,21:35,36) of the guide fence to clamp an upstanding grip bar (15:59) at one side of the base between the member and the wings, further pivotal movement of the locking lever clamping the hook (18:44) to a lip (12:45) at the other side of the base and placing the lever in a "locked" position. The guide fence (11) can have a channel member (23) slidable along it, a protractor member (24) being pivotally mounted on the channel member and defining a right-angled recess to locate a tile (30) to be cut by cutting means (28). The protractor member can be angularly adjusted to alter the angle of the cut through the tile on the base, and clamped in its adjusted position by a bolt (26).

## Description

This invention relates to cutting apparatus, particularly, though not exclusively, for cutting flat plates, such as ceramic tiles, and has as its object the provision of such apparatus in a convenient form.

An apparatus of this type is described and shown in our UK Patent Application No. GB2303820A. Such apparatus has a guide fence linearly slidably adjustable over a base on which a tile to be cut is received, in use. The guide fence is provided with quick engagement and release means for ease of locking the guide means in a selected adjusted position and the release therefrom for subsequent adjustment movement over the base. At each end of the guide fence such means are in the form of a pivoted clamp which snap-fittedly engages with an upper part of the body of the cutting apparatus.

One aspect of the present invention relates to an improved form of guide fence of this type, with an alternative form of quick release and engagement means, whilst another aspect of the present invention relates to the provision, with a guide fence in use, which fence need not be in accordance with the first aspect of the invention, of adjustable means for introducing a flat plate to a cutting means of the cutting apparatus at a selected angle. In one embodiment the adjustable means on the guide fence is an adjustable protractor provided with a right angled recess to accommodate a right-edged tile, which, by virtue of the adjustable nature of the protractor, can be moved onto cutting means at a selected angle to produce a desired cut through the tile. Accordingly a cut can be made, for example from corner to corner through the tile, or at right angles from one side to the opposite side thereof, or at any angle therebetween said two examples.

The invention will now be described, by way of example, with reference to the accompanying drawings, in which:
Figure 1 is a schematic, top perspective view of a base of a cutting apparatus, with a guide fence of the invention shown thereon, with one end of the guide fence being shown in two alternative states;
Figure 2 is a fragmentary view of the opposite end of the guide fence, shown in alternative position from that of Figure 1;
Figure 3 is a schematic view similar to that of Figure 1, but showing another aspect of the invention, where adjustable protractor means are associated with a guide fence to alter the angle of cut through a tile resting on, and in a plane parallel to, the base of the cutting apparatus;
Figure 4 shows component parts of an alternative embodiment of the cutting apparatus of Figures 1 and 2, some of said component parts being shown inverted for the sake of clarity; and
Figures 5 to 7 respectively show consecutive stages in the operation of a locking lever with the cutting apparatus employing the component parts shown in Figure 4.

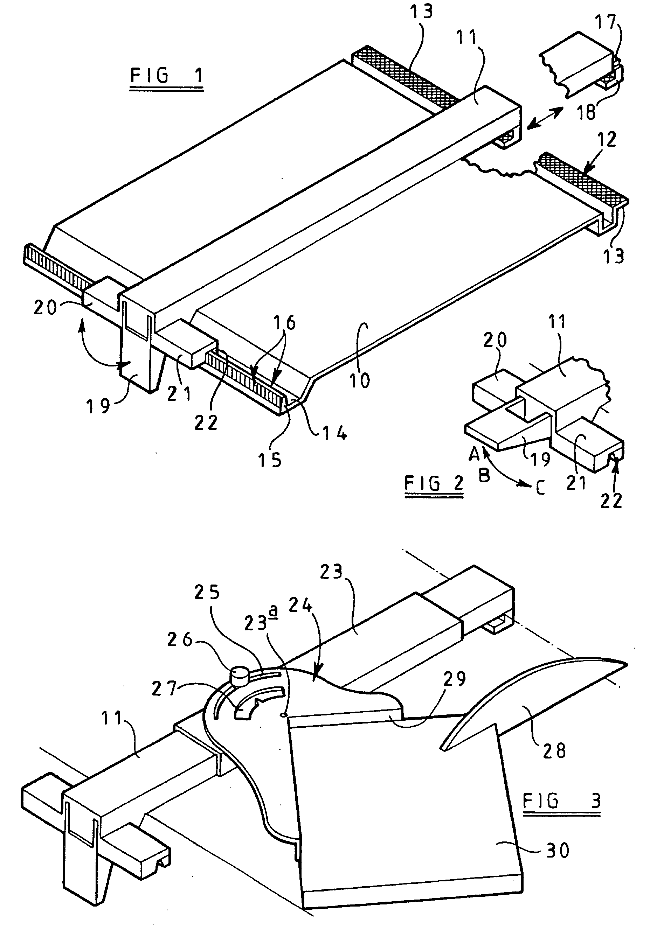

Figure 1 shows part of a cutting apparatus of a form similar to that described and shown in our above mentioned British Patent specification, although various components of the cutting apparatus are not shown. The cutting apparatus comprises a flat base 10 across which is adjustably slidable a generally rectangular, elongated guide fence 11. Respective opposite ends of the guide fence engage with opposite edge portions of the base. As shown in Figure 1, one edge portion is formed as an outwardly extending lip 12 in the same plane as the main part of the base, the upper and lower surfaces of this lip being formed with serrations or fine ribbing 13 for a purpose to be described. The opposite edge is formed with a channel 14 leading to an outer, upwardly extending rib or grip bar 15, which is provided with serrations or fine ribbing 16 on both its inner and outer surfaces. As shown in Figure 1, this grip bar 15 can taper upwardly.

Extending through the downwardly open guide fence 11 is a bar 17 which, at the one end of the guide fence at the lip 12, can extend out of the fence 11. The bar 17 at said end is formed with a downturned and then inturned part 18 in the form of a clamp or hook which, as will be described, is intended to engage with the lip 12 so that said lip is tightly fitted between the upper and lower surfaces of the hook, which are provided with serrations or fine ribbing. Alternatively the engagement could be between the inner surface of the inturned part and the underside of the fence 11. The fragmentary view of this end of the guide fence 11 shown in Figure 1 illustrates the position where the bar is extended slightly beyond the end of the fence, thereby allowing sliding adjustment of the fence over the base as will be described, whilst in the main drawing of the guide fence shown in Figure 1, the bar is shown schematically drawn inwardly to the guide fence so as to clamp onto the lip 12 to lock the guide fence in position at this side of the base.

The opposite end of the bar is formed with downwardly facing rack teeth with which a pinion of a locking lever 19 is engaged. Extending from respective opposite sides of the guide fence 11 at the grip bar 15 are a pair of wings 20, 21 respectively which each, at the underside thereof are formed with an inwardly extending recess in which the grip bar 15 is received to allow this end of the guide fence 11 to slide across the base. The 'base' or closed side of the recess engages the outer side of the grip bar 15, and can if necessary be formed with serrations or fine ribbing. The open side of the recess, at the opposite side of the grip bar, has a bar 22 disposed thereat, this bar being connected, for sliding movement in a plane parallel to the plane of the base 10, to the locking lever 19.

The slidable bar 22 is connected to the locking lever at a pivot pin which extends through the pinion, through spaced apart arms of the bar 22 at opposite sides of the pinion, and through spaced apart arms of the lever 19 at opposite sides of the arms of the bar 22.

The lever 19 has an inwardly directed block projection on its inner surface which can lock under the base at the grip bar, and opposite sides of the lever have cam surfaces which can engage lower surfaces of the wings. Movement of the lever to this position of engagement moves the pivot, and thus the bar 22, in a direction away from the main base surface and locks the lever in place when the engagement position is fully reached.

The arrangement is such that, as shown in Figure 2, with the locking lever 19 pivoted to its uppermost position as indicated by the letter A, the bar 22 is at its extreme spaced position in the recess relative to the 'base' surface of said recess, so that there is maximum spacing between said 'base' and said bar 22, this spacing being larger than the cross-sectional thickness of the grip bar 15 so that in this position this end of the guide fence is not locked to the grip bar 15 and can thus be slid freely therealong. The upwardly pivoted position A of the locking lever 19 also corresponds to the position shown in the fragmentary view in Figure 1 for the opposite end of the guide fence where the bar 17 has been moved slightly outwardly from the guide fence 11, so that this end of the guide fence is similarly free for said sliding movement, in this case sliding movement of the hook part relative to the lip 12.

Movement of the locking lever from position A to position B causes said pivot to move linearly as described, and thus move the clamp bar 22 slightly closer to the vertical 'base' surface of the recess, this movement being sufficient so as firmly to clamp the grip bar in said recess. Of course rather than the pivoting action moving the bar 22, there could possibly be some arrangement in which the bar remains stationary whilst the wings move relative to the bar. In another possible alternative, there could be movement of both of said components. However whichever arrangement is used, the gap in which the grip bar is received narrows so as to prevent sliding movement, with the grip bar being tightly clamped between said bar 22 and the wings. The fine ribbing or serrations on both sides of the grip bar and/or on the recess 'base' and bar 22, enhances the locking action. This clamping also simultaneously aligns the fence with the grip bar 15, thus correcting any slight deviation of the guide fence from its required alignment at right angles to said opposite sides of the base.

Completion of the locking action by pivoting the lever downwardly from position B to position C causes angular movement of the pinion sufficient to slide the bar 17 engaged therewith, so that the hook part 18 moves inwardly towards the guide fence 11 so as to clamp onto the lip 12 with the fine ribbing/serrations enhancing the clamping action. Moreover the lip 12 and/or the hook part 18 can be appropriately complimentarily tapered also to enhance said clamping upon sufficient inwards linear movement of the hook part. As described, a 'cam' lock is provided for the locking lever 19 when it is in position C. Alternatively some form of snap-fit or overcentre arrangement could be used alone, in combination together, or with the cam lock

When it is wished slidably to adjust the guide fence across the base, it is a simple and quick matter to pivot the locking lever 19 upwardly from position C, through position B to position A, thereby simultaneously releasing the clamping action both at the grip bar 15 and also at the lip 12. Not only does this allow sliding movement of the guide fence, but it also allows the guide fence to be removed vertically from the base if so desired.

Figure 3 shows a similar form of guide fence to that of Figures 1 and 2, and the other aspect of the invention referred to above will be described in relation to this illustrated guide fence. However it is to be understood that this aspect of the invention could be utilised with guide fences of different forms, and is unrelated to the guide fence, per se.

Figure 3 shows an inverted rectangular elongated channel member 23 which is slidably arranged as a close-fit on the top of the guide fence 11, with the sides of the channel of member 23 extending down the opposite sides of the guide fence 11. This slidable channel member 23 can be arranged to be captive on the guide fence 11, or alternatively can be slidable off the guide fence at one end thereof and can be arranged, alternatively, to be liftable off said guide fence. Pivotally adjustably mounted on the channel member 23, e.g. at 23a, is a protractor member 24, which has an arcuate slot 25 therein, through which the stem of a pivot bolt 26 passes, the stem being threadedly received in the member 23. The bolt serves to clamp the protractor member 24 in an angularly adjusted position, but also to allow adjustment of the protractor, when the bolt is released, by sliding the protractor relative to the bolt so that there is relative movement between the bolt and said slot. A scale 27 is provided for determining the adjustment, and angle of cut, as will be described.

The bolt is arranged at one longitudinal side of the upper part of the guide fence, and the protractor extends therefrom beyond the other longitudinal side of the guide fence so as to lie over the base. With the arrangement shown in Figure 3, the guide fence has been slidingly adjusted to a position near a cutting wheel 28 of the cutting apparatus so that a tile located at the protractor can be cut by the cutting wheel.

A forward part of the protractor at the end thereof remote from the pivot bolt 26, is formed with a right angled recess 29, the two adjoining sides of which are formed by downturned lips. The recess is arranged and sized to receive a conventional flat square tile 30 as shown, with two respective adjoining sides of the tile being received against said adjoining depending sides of the recess 29 in the protractor, the sides lying generally at 45° to the length of the guide fence 11 when the protractor is in its central adjusted position shown in Figure 3 with the pivot bolt at the centre of the slot 25. In this position, and with the guide fence adjusted accordingly along the base, it may be that upon sliding the channel 23 across the guide fence towards the cutting wheel 28, the tile received on the base will be cut from corner to corner, although Figure 3 is in this respect purely schematic in that it shows a somewhat different cut. Moreover the protractor would be arranged and shaped so as to be clear of any part of the cutting wheel as the channel member 23 is moved fully across the guide fence 11 to complete the cut through the tile.

It will be appreciated that by undoing the bolt 26 and pivoting the protractor member 24 thereabout, as well as adjusting the position of the guide fence on the base, the angle and position of the cut through the tile can be varied as required in a versatile manner. The scale 27 provides an indication of the angle of cut through the tile. It will be appreciated that this protractor arrangement can be fitted to guide fences other than that shown in Figures 1 and 2 in that all is required is that the member 23 or equivalent member on which the protractor is mounted is adjustably slidable along the guide fence.

Clearly the form of the recess in the protractor can be varied as required, although the arrangement shown is believed suitable for normal square tiles, and possibly also for rectangular plates. For plates with a different configuration, an alternative suitable form of recess can be provided, possibly by way of an alternative replacement protractor member 24, alternative protractor members thus being supplied with the cutting apparatus. Clearly whatever the form of the recess, it is merely necessary that the tile which rests on the base is, in effect, maintained in the correct position for cutting at the angle required as the protractor, and thus the channel member, is slid across the guide fence. Some form of lock or other restraint could be provided if necessary to maintain the tile in position.

In an alternative embodiment of cutting apparatus according to the invention, the means for clamping the guide fence at opposite sides of the base are somewhat different from the embodiment described, and reference will now be made to this further embodiment in relation to Figures 4 to 7 of the accompanying drawings.

Figure 4 shows a guide fence 31 which has its main elongated portion 32 of channel-form, so that it is open downwardly. At its one end, in alignment with the elongate portion 32, the guide fence is formed with a downwardly open recess 33. The inner surface of the recess is closed by a wall 34 which extends at opposite sides of the recess to define respective surfaces of wings 35, 36. At the position of said wings, or along its whole length, the surface of the wall 34 facing outwardly in the direction of the portion 32 is ribbed. Each wing has its upper surface extended over said wall 34 in the direction of the portion 32, and then downturned to provide a lip 37 which is spaced from the wall 34 to define a channel 38.

The outwardly directed side of the recess 33 is substantially closed by a depending wall 39. However two slots 40 are defined at opposite vertical sides of the wall 39, thereby allowing access into the recess 33. The wall 34 at the top of the recess is formed with a rectangular opening 41, through which are received a sliding bar 42 and a clamping member 43, which are both shown in an inverted state in Figure 4. As with the first embodiment, the bar 42 has a hook 44 or the like at its one end to engage an outwardly directed lip 45 at an edge portion of the base 45a.

As with the first embodiment described, the bar 42 is slidably retained within the channel of the guide fence, and at its end remote from the hook 44, it is formed with a pair of indentations 46 in its opposite side walls respectively to receive drive pegs of an operating lever 47 as will be described, the lever 47 being shown in an inverted state in Figure 4. The clamping member 43 is formed with a ribbed wall surface 48 from which is spaced a block 49 by a distance substantially corresponding to the width of the channel 38. In the lower surface of this block is a transverse slot 50, which with the clamping member 43 in its normal, non-inverted, position of use is directed downwardly. The operating lever 47, which like the guide fence 31, bar 42, and clamping member 43, is a plastics moulding, is formed with a main grip part 51 from which extends a wall 52. From this wall 52 extend a pair of spaced parallel arms 53, 54 respectively which at their upper and lower ends remote from the wall 52 are each provided with cam surfaces 55, 56 respectively. Adjacent the cam surface 55, each arm is provided with a short inwardly directed cylindrical peg 57, whilst positioned behind the pegs 57 in the direction of the wall 52 and nearer the cam surfaces 56 is a cylindrical pivot bar 58 extending integrally transversely across the lever 47 from one arm to the other.

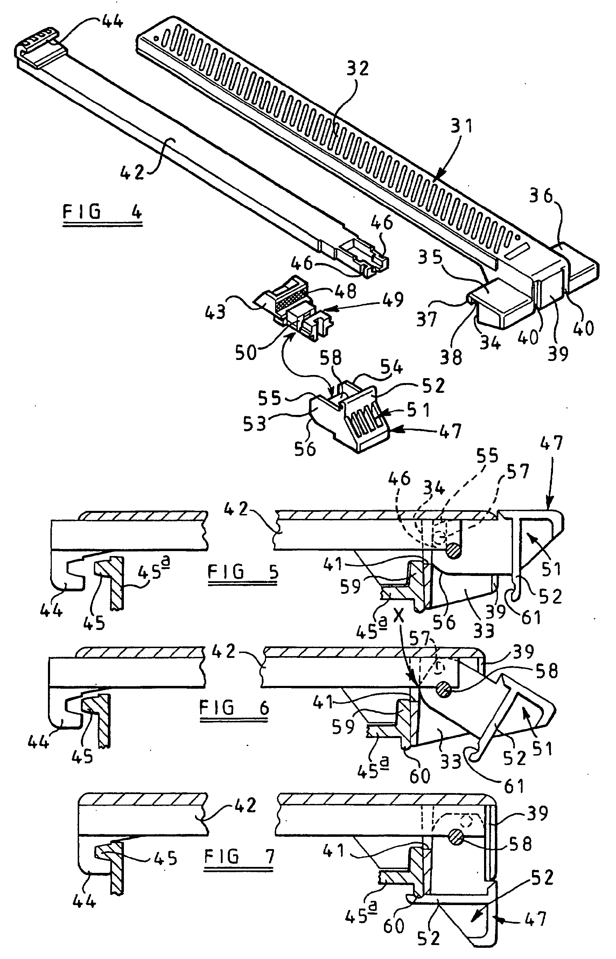

On assembly, with the components 42, 43 and 47 inverted from the respective positions shown in Figure 4, the bar 42 is slidingly arranged in the guide fence 31, with its end remote from the hook 44 passing through the opening 41 and into the recess 33 adjacent the upper surface thereof as shown in Figures 5 to 7. The operating lever is disposed at the recess 33 as shown in Figures 5 to 7, with its arms 53, 54 respectively passing through the slots 40 so as to be received adjacent respective opposite sides of the recess adjacent said respective wings 35, 36. With the arms so received in the recess, and with the lever arranged in its Figure 5 position with the wall 52 vertical, the pegs 57 associated with the arms 53, 54 are received in the indentations 46 at the end of the bar 42 so as to connect the operating lever 47 to said bar. As shown in Figure 5, with the lever 47 in its unlocked position, the indentations are just within the recess, at a position adjacent the wall 34, and in this state the hook 44 of the bar 42 is spaced clear of the lip 45 of the base 45a. The lips 37 of the wings extend to downwardly depending flanges which extend to respective opposite sides of the channel part of the guide fence 31. The part of the clamping member 43 which defines the ribbed wall surface 48 is received slidingly between said flanges, and in the position shown in Figure 5 the ribbed wall 48 is disposed slightly rearwardly of the inner face of each lip 37, with the block 49 extending through the opening 41 and into the recess, the clamping member 43 thus being positioned below the end of the bar 42 which is received in the recess. In the position shown in Figure 5, the pivot bar 58 is received in the slot 50 in the block 49 so as to connect the operating lever 47 to said clamping member 43. In the position shown in Figure 5, it can be seen that the outer end surface of each of the arms 53, 54 is lightly against respective surfaces at the opposite sides of the opening 41, with there being clearance between an upstanding lip 59 on the base and the ribbed surface 48 of the clamping member 43, the lip 59 corresponding to the grip bar 15 in the first embodiment. Accordingly with the operating lever 47 in its unlocked state, as shown in Figure 5, it is possible slidingly to adjust the guide fence 31 over the base of the cutting device as the lip 59 has clearance in the channel 38 defined between the surface of the wall 34 on the one hand and the opposite facing surfaces of the lips 37 together with the ribbed wall surface 48 on the other hand. In this position, as mentioned, the hook 44 is also clear of the lip 45.

If the operating lever 47 is now moved to its partially locked position, by pivoting it downwardly to the position shown in Figure 6, it can be seen that the cam surfaces 56 effect camming of the lever 47 by engaging at point X the surfaces at the opposite sides of the opening 41, this camming, by way of the pivot bar 58, causing a slight sliding movement of the clamping member 43 to bring its ribbed wall surface 48 to take up the clearance and tightly clamp onto one side surface of the lip 59, with the opposite side surface of the lip 59 being held tightly against the wall 34 as shown in Figure 6, thereby to clamp this one end of the guide fence to the base of the cutting apparatus. It can be seen that in this position the other cam surfaces 55 engage the underside of the top surface of the recess 33. The pivoting of the operating lever also causes the connected bar 42 to slide within the guide fence 31, so that the hook 44 is brought adjacent the lip 45, though still out of engagement therewith.

Finally if the lever 47 is moved from its Figure 6 to its Figure 7 position by further pivoting, it can be seen that the continued pivoting, by way of the connection to the bar 42 by way of the pegs 57 in the indentations 46, draws the bar to a position where its hook 44 is tightly locked onto the lip 45. The slot formed by the hook is preferably ribbed so that it grips tightly over the lip 45 which may also similarly be ribbed. Moreover in this position the flat surface of each arm between the cam surface 56 and the wall 52 forms a cam bearing surface tight against the inner surface of the wall 34, and the lever can be held in its locked position, as shown in Figure 7, by a ridge 60 at the bottom of the lip 59 engaging in an arcuate groove 61 in an inner face of the wall 52. Release of the lever 47 to allow adjustment of the guide fence is of course the reverse process with, as on locking, the unlocking taking place in one complete movement rather than the separate movements shown for clarity in Figures 5 to 7.

With this second embodiment, it would of course be possible to employ the adjustable protractor invention shown in Figure 3. As with the Figure 1 embodiment, the engaging/clamping surfaces of the guide fence and the base can be formed either with continuous ribbing or with a plurality of ribs on one surface and at least one complementary engagement rib on the other.

## Claims

1. Cutting apparatus comprising a base, cutting means for cutting an article of plate-like form received on said base, and guide means movable over the base, the guide means having relatively adjustably associated therewith article location means for adjusting, in use, the positional/angular relationship between the cutting means and the article to be cut thereby.

2. Apparatus as claimed in Claim 1, wherein the article location means defines a recess at which, in use, the article is located.

3. Apparatus as claimed in Claim 2, wherein the recess is right-angled, with adjoining sides of the recess being lips downturned from the plane of the remainder of the article location means.

4. Apparatus as claimed in any one of Claims 1 to 3, wherein the article location means is pivotally mounted at the guide means.

5. Apparatus as claimed in any one of Claims 1 to 4, wherein the article location means is carried by a member which is slidable along the guide means so as, in use, to move the article to be cut towards and away from said cutting means.

6. Apparatus as claimed in any one of Claims 1 to 5, wherein the guide means is slidably movable over the base in a direction perpendicular to a cutting wheel defining said cutting means.

7. Apparatus as claimed in Claim 4, wherein the article location means has an arcuate slot therein through which a clamping element extends, so that when the article location means is adjustably pivoted, in use, it can be clamped in its adjusted position by said clamping element.

8. Apparatus as claimed in Claim 7, wherein the degree of angular pivotal adjustment of the article location means can be determined by the position of an indicator of the article retention means relative to a scale provided at the guide means.
